# EUROPEAN PATENT SPECIFICATION

(11) **EP 3 030 434 B1**
(45) Date of publication and mention of the grant of the patent: **10.05.2017**
(21) Application number: 14780579.0
(22) Date of filing: 05.08.2014
(51) Int. Cl.: B60C 23/04, B29D 30/00

(54) **A DEVICE FOR MONITORING TYRES FOR VEHICLE WHEELS AND TYRE PROVIDED WITH SAID MONITORING DEVICE**
ÜBERWACHUNGSVORRICHTUNG FÜR FAHRZEUGREIFEN UND REIFEN MIT DIESER ÜBERWACHUNGSVORRICHTUNG
DISPOSITIF DE CONTRÔLE DE PNEUS POUR ROUES DE VÉHICULE ET PNEU COMPORTANT LEDIT DISPOSITIF DE CONTRÔLE

(30) Priority: 05.08.2013 IT MI20131333
(43) Date of publication of application: 15.06.2016
(73) Proprietor: Pirelli Tyre S.p.A., 20126 Milano (IT)
(72) Inventor: MANCOSU, Federico, I-20126 Milan (IT); BRUSAROSCO, Massimo, I-20126 Milan (IT)
(74) Representative: Baroni, Matteo
(86) International application number: PCT/IB2014/063705
(87) International publication number: WO 2015/019283

(56) References cited:
- WO-A1-2013/098711
- DE-A1-102007 030 231
- US-A1- 2005 285 726
- US-A1- 2006 158 340

## Description

The present invention refers to a device for monitoring tyres for vehicle wheels.

The invention further refers to a tyre for vehicle wheels provided with said monitoring device.

For some types of tyres, above all the ones for which high-level performances are required, monitoring devices have been studied for a long time that, being mounted inside said tyres, will have the function of detecting characteristic quantities of the tyre, in order to allow a control of the functioning and of the conditions of the tyre itself substantially in real time.

Such monitoring devices will periodically communicate with the instruments available on board of the vehicle, so that all the relevant information will be provided to the driver and/or to control systems of the vehicle, for example for activating or for regulating at best warning systems and/or controlling systems of the vehicle, of the braking, etc..

The monitoring devices for tyres typically comprise an electronic unit and a connection element. The electronic unit comprises at least one sensor, for example a temperature sensor, a pressure sensor, a sensor able to measure/identify the deformations undergone by the tyre while rolling, such as for example an accelerometer, a strain gauge, etc., and a transmission system for sending the data detected by said at least one sensor.

The connection element has the function of keeping the electronic unit constrained to the tyre. In particular, in order to identify and to measure the deformations undergone by the tyre and to estimate, from said deformations, some parameters (e.g. the length of the tyre footprint, the load weighing on the tyre, the angular speed, the friction between the tyre and the rolling surface, the wear of the tyre, etc.), it may be convenient to have one or more monitoring devices in correspondence of the crown portion of the tyre, namely the one placed in correspondence of the tread band of the tyre itself. In particular, it may be convenient to arrange one or more monitoring devices on the inner surface of the tyre, for example on the portion of inner surface opposite to the tread band.

Document DE 10 2007 030231 A1 , according to the preamble of claim 1, discloses a module having a box formed from rubber material fastened to a tire inner side, and an electronic module provided with integrated components. The electronic module is held in the box over a circular form closure. The box has an opening on its upper side for assembling and disassembling the electronic module. An air cushion and a lower plate are arranged between a lower side of the electronic module and the inner side of the tire for absorbing mechanical stresses. The box has a flange and grooves in its edge areas.

Document US 2005/285726 A1 discloses a telemetry unit for mounting inside a pneumatic tyre, which includes a piezoelectric element supported in a housing, with an actuator arranged for contact with the element, to deflect the element in response to external forces acting on the actuator during rotation of the tyre. For every rotation of the tyre, cyclic pulses of electrical charge are generated by the deflection of the element. The charge is stored and utilised under a power consumption protocol including the steps of: initiating power to a data measurement circuit for measuring data from the environment local to the unit; disabling power to the data measurement circuit; initiating power to a data transmission circuit; transmitting data from the measurement circuit; and disabling power to the transmission circuit. The power consumption protocol therefore minimises consumption of the generated power, during measurement and transmission of data by the unit.

A fundamental problem of the connection elements relates to the fact that the tyre, above all at the beginning and at the end of the tyre footprint area, undergoes mechanical stresses which provoke relevant deformations. On the other hand, the case which houses the electronic unit is typically made of a substantially rigid material, in order to protect its content and to allow a correct functioning of the electronic unit itself.

The fact that the electronic unit (rigid) should be constrained to the inner surface of the tyre (that undergoes deformation) is a very critical aspect for the connection element: the latter, although being secured to the inner surface of the tyre, and thus being subject to the same stresses as the tyre, has to keep a reliable and durable constraint with a substantially non-deformable object, namely the case of the electronic unit.

The Applicant verified that, in case the connection element is not properly structured, the exchange of stresses between the case of the electronic unit and the connection element may bring to tears and/or breakings of the connection element itself, up to release the electronic unit from the tyre. Such tears may also have microscopic dimensions, initially, and then progressively expand up to compromise the structural integrity of the connection element. The electronic unit, after the breaking of the connection element, will be then free to move inside the tyre during the rolling of the tyre itself, with consequent problems for a correct detection and transmission of the data, and with the risk of breakings and/or failures of the electronic unit itself.

Such problem was faced and solved by the monitoring devices described in the patent applications WO2010/043264, WO2006/103706, WO2007/000781, WO2007/121768, WO2013/098711 WO2013/098712 in the name of the same Applicant.

The shape of the connection elements used in such monitoring devices allows to obtain a mechanical decoupling between the electronic unit and the deformations undergone by the inner surface of the tyre, thus providing a reliable and durable constraint.

With more detail, such connection elements have two separate base surfaces intended to be connected to the inner surface of the tyre, so that the mechanical stresses undergone by the tyre are absorbed by the connection element, also by virtue of the fact that the two base surfaces can be deformed/moved in a substantially mutually independent way, thus following the deformations of the inner surface of the tyre. Only a small part of such deformations/stresses are thus transmitted to the electronic unit, thereby significantly reducing the risk that the rigidness of the case may damage the connection element.

The Applicant, however, noticed that this type of connection elements cannot be effectively used for particular categories of sensors, which indeed have the function to detect the stresses and the deformations undergone by the tyre, particularly in correspondence of the tyre footprint area. Such sensors, indeed, may be adapted to detect data useful to identify particular operating conditions/situations, such as for example the friction between the tyre and the road surface, the forces exchanged in the tyre footprint area, the evolution of the shape of the tyre footprint area, the wear of the tyre, an aquaplaning condition, etc., that are determined based on the analysis of the mechanical stresses in tangential, longitudinal and/or radial direction undergone by the tyre. By way of example, it is possible to consider the processing techniques described in the patent applications WO2005/005950, WO2005/043106, WO2005/042281, WO2005/042322, WO2006/034731, WO2007/102175, WO2008/065465, WO2010/046872, WO2010/046871, WO2010/073272, WO2012/042369, WO2012/085649, WO2012/085655, in the name of the same Applicant.

The Applicant thus perceived that, in order to use correctly also the sensors of this type, it is necessary to provide a connection element that keeps the electronic unit firmly constrained to the tyre and, at the same time, reduces as much as possible the filtering and/or dampening of the deformations, so as to allow the sensor included in the electronic unit to detect, in the most reliable and precise way, the mechanical stresses undergone by the tyre.

In order to search for an appropriate technical solution, the Applicant has carried out an in-depth analysis about connection elements comprising a first portion intended to be secured to the tyre, and a cavity intended to contain the electronic unit, wherein the first portion serves as "radial extension" of the inner surface of the tyre and allows to make the electronic unit substantially integral with the inner surface itself, so as to detect its stresses and the respective deformations in an appropriate way.

The patent application EP936089 describes an example of connection element of this type.

Although the results were good in terms of the quality of the detection of the stresses undergone by the tyre, the Applicant verified that the securing of the connection element to the inner surface of the tyre is highly unsatisfactory: the monitoring device, indeed, remains constrained to the tyre for a time/distance/speed significantly lower than required.

By carrying out the aforementioned analysis, the Applicant noticed that there can be different factors that allow the forming of an air accumulation between the base surface of the monitoring device and the inner surface of the tyre; such factors may comprise:
i) the natively microporous structure of the material which the first portion of the connection element and the inner surface of the tyre are made of;
ii) the inner surface of the tyre that is not perfectly smooth, due to the presence of the typical texture impressed by the moulding of the tyre;
iii) micro-breakings and/or micro-tears that may form on the base surface of the connection element and/or on the inner surface of the tyre during the rolling of the latter.

The Applicant believes that an undesired accumulation of air between the base surface of the connection element and the inner surface of the tyre may occur both while the monitoring device is being secured to the tyre, and during the rolling of the tyre.

The Applicant, indeed, noticed that the monitoring device, during the rolling of the tyre, is subject to oscillations having a significant component in radial direction; such oscillations imply a movement of the monitoring device between a first position, wherein it tends to move away from the inner surface of the tyre itself, and a second position wherein the monitoring device is pressed against the same inner surface.

Without being bound to any specific interpretative theory, the Applicant believes that the movement of the monitoring device towards the first position provokes a storing of air in hollow spaces that, as said, can be present and/or can form between the base of the monitoring device and the inner surface of the tyre.

The Applicant believes also that the movement of the monitoring device toward the second position is not necessarily able to provoke the release of all the air previously stored.

The Applicant thus made the hypothesis that the air that is accumulated and is not released tends to heat up during the rolling, thus increasing its pressure up to a progressive weakening of the constraint between the base of the monitoring device and the inner surface of the liner, and a full detachment of the monitoring device.

The Applicant thus had the intuition that, in order to obtain a reliable securing of the base of the monitoring device, escape elements may be provided, that allow to release as much as possible the air stored in the interface between the monitoring device and the inner surface of the tyre, so as to prevent the cause of the detachment described above.

More in particular, the Applicant found that, by providing at least an escape element in the portion of the connection element intended to be secured to the inner surface of the tyre, and allowing, by means of said escape element, to release the air accumulated between the base surface of the connection element and the inner surface of the tyre, it is possible to improve significantly the securing of the monitoring device to the inner surface itself of the tyre. According to a first aspect, an object of the present invention is a monitoring device for tyres for vehicle wheels, said monitoring device comprising:
an electronic unit adapted to detect at least one characteristic quantity of a tyre and to transmit at least one corresponding parameter representative of said detected quantity;
a connection element for keeping said electronic unit constrained to an inner surface of said tyre, said connection element comprising at least a first portion with a base surface to be secured to the inner surface of said tyre, and a cavity for housing said electronic unit;
wherein at least that part of said first portion which is interposed between said electronic unit and said base surface is delimited by a substantially continuous perimetric surface;
wherein said first portion has at least one escape element at least partially obtained on said base surface and cooperating with the same in order to release air accumulated between the base surface and the inner surface of said tyre when said base surface is secured to said inner surface, wherein said escape element comprises a first, a second and a third grooves formed in said base surface,
wherein said third groove joins said first and second grooves and is delimited by said first and second grooves.

According to another aspect, an object of the present invention is a tyre for vehicle wheels, comprising:
an inner surface having a substantially toroidal shape;
a monitoring device operatively connected to said inner surface of said tyre, said device comprising:
   - an electronic unit adapted to detect at least one characteristic quantity of said tyre and to transmit at least one corresponding parameter representative of said detected quantity;
   - a connection element for keeping said electronic unit constrained to the inner surface of said tyre, said connection element comprising at least a first portion with a base surface secured to the inner surface of said tyre, and a cavity for housing said electronic unit;
wherein at least that part of said first portion which is interposed between said electronic unit and said base surface is delimited by a substantially continuous perimetric surface;
wherein said first portion has at least one escape element at least partially obtained on said base surface and cooperating with the same in order to release air accumulated between the base surface and the inner surface of said tyre,
wherein said escape element comprises a first, a second and a third grooves formed in said base surface,
wherein said third groove joins said first and second grooves and is delimited by said first and second grooves.

The Applicant verified that, in this way, it is possible to obtain a durable constraint between the monitoring device and the inner surface of the tyre and, at the same time, the electronic unit can detect in a reliable way the mechanical stresses and the deformations undergone by the tyre, above all in correspondence of the tyre footprint area. Otherwise, the Applicant believes that the air stored between the base surface of the connection element and the inner surface of the tyre causes a progressive separation of the monitoring device from the tyre, up to a full detachment.

The Applicant further verified that, in this way, the constraint between the base surface of the first portion of the connection element and the inner surface of the tyre is particularly reliable and durable.

The Applicant, indeed, believes that said third groove contributes to provide a higher possibility to release the air that tends to be stored between the connection element and the inner surface of the tyre, thus further reducing the risk of damaging the constraint between the connection element and the inner surface.

In accordance with one or more of the aspects mentioned above, the invention comprises one or more of the preferred features described herebelow.

Preferably one or more of said one or more grooves join perimetric points of said base surface.

The Applicant verified that, with this configuration, the constraint between the base surface of the connection element and the inner surface of the tyre is particularly effective up to a high speed.

The Applicant, indeed, believes that said grooves, and in particular said first and second grooves, besides allowing a release of the air previously stored between the base surface of the connection element and the inner surface of the tyre, facilitate the adaptation of the base surface to the curved shape and to the deformations of the inner surface of the tyre, thus improving the durability of the constraint between the monitoring device and the tyre.

Preferably said first and second grooves are substantially parallel to each other.

Preferably said base surface has a substantially circular shape, said first and second grooves being arranged along respective chords of said circular shape.

Preferably said first and second grooves extend over the whole length of the respective chords.

Preferably said first and second grooves are positioned on opposite sides relative to a geometric centre of said base surface.

Preferably said first and second grooves are substantially symmetrical relative to a geometric centre of said base surface.

Preferably said first and second grooves have substantially the same depth, measured in a direction orthogonal to said base surface.

Preferably said third groove is substantially arranged along a portion of a first diameter of said circular shape.

Preferably said third groove is substantially orthogonal to said first and second grooves.

Preferably said third groove has a depth, measured along a direction orthogonal to said base surface, substantially equal to the depth of said first and/or second groove.

Preferably said base surface further has a slot associated to said at least one escape element.

Preferably said slot has a depth, calculated in a direction orthogonal to said base surface, which is greater than a depth of said first and second grooves.

The Applicant verified that, in this way, the reliability and the durability of the constraint between the base surface of the first portion of the connection element and the inner surface of the tyre are further increased.

The Applicant, indeed, believes that said slot allows to store at least temporarily a certain quantity of the air accumulated, in particular in correspondence of the central zone of the base surface of the connection element, avoiding that said air forces the constraint between the base surface itself and the inner surface of the tyre and may contribute to a detachment of the monitoring device.

The Applicant believes also that said slot allows the connection element to further absorb the deformations transmitted by the inner surface of the tyre, without compromising the quality of the detection carried out by the control unit.

Preferably said slot is interposed between said first and second grooves. Preferably it is connected to the latter.

Preferably said slot has a main extension substantially parallel to said first and/or second groove.

Preferably the main extension of said slot is substantially orthogonal to said third groove.

Preferably said slot is substantially equidistant from said first and second grooves.

Preferably said slot is arranged along a portion of a second diameter of said circular shape.

Preferably said slot extends symmetrically to a first diameter substantially orthogonal to said first and/or second groove.

Preferably the first portion of said connection element has a shape which is tapered from said base surface towards an upper edge of said cavity.

Thus, a sufficiently wide contact surface between the connection element and the internal surface of the tyre, so as to ensure a stable and durable constraint, and a limited overall mass of the connection element and of the monitoring device are obtained at the same time.

Preferably the first portion of said connection element has an axial symmetry relative to a main axis substantially orthogonal to said base surface passing through a geometric centre of said circular shape.

Preferably said connection element comprises also a second portion secured to said cavity and housing said electronic unit.

Preferably the second portion of said connection element has:
a. a base wall, in contact with a bottom surface of said first portion, and
b. a side wall in contact with an internal side surface of said first portion,
said cavity being defined by said bottom surface and said internal side surface.

Preferably said second portion has at least a first rib extending from said side wall in the proximity of said base wall.

Thus the quality of the constraint between the first and the second portion of the connection element is improved.

Said at least one rib, indeed, by interfering with the internal side surface of the first portion of the connection element, contributes to keep the second portion secured within the cavity.

In particular, the first rib contributes to oppose possible movement of the second portion away from the bottom surface of the first portion.

Preferably said first rib has at least one interruption, and in particular a pair of interruptions placed on opposite sides relative to a central axis of said second portion.

Thus the execution of an overmolding by injection of the first portion on the second portion is allowed.

Preferably said second portion has a second rib extending from said side wall.

Preferably said second rib is substantially continuous along the external perimetric extension of said side wall.

Preferably the base surface of the first portion of said connection element is secured to the inner surface of said tyre so that said first and/or second groove is substantially orthogonal to a circumferential direction of said tyre.

Further characteristics and advantages will become more apparent from the detailed description of a preferred, but not exclusive, embodiment of the invention. Such description is provided in the following with reference to the attached drawings, given by way of non-limiting example, wherein:
- figure 1 shows a perspective schematic view of a connection element included in a monitoring device in accordance with the present invention;
- figure 2 shows a perspective schematic view of the element of figure 1 according to a different angle;
- figure 3 shows a perspective schematic view of a different embodiment of the element of figure 2;
- figure 4 shows a perspective schematic view of a further different embodiment of the element shown in figures 2 and 3;
- figure 5 shows a side view of the element shown in figures 2-4;
- figure 6 shows a sectioned view taken along line a-a of the element shown in figure 5;
- figure 7 shows a sectioned view of a portion of the element shown in figure 4 according to a plane orthogonal to the one indicated by line a-a in figure 5 and passing through the central axis X of said element;
- figure 8 shows a perspective schematic view of a portion of the element shown in figures 1-6;
- figure 9 shows a side view of the portion of figure 8;
- figure 10 shows a perspective schematic view of an electronic unit forming part of the monitoring device in accordance with the present invention;
- figure 11 shows a simplified block diagram of the electronic unit of figure 10;
- figure 12 shows schematically a monitoring device according to the present invention installed inside a tyre;
- figure 13 shows schematically a top view of the monitoring device of figure 12 installed inside the tyre.

With reference to the attached figures, 1 indicates a monitoring device for tyres of vehicle wheels in accordance to an aspect of the present invention.

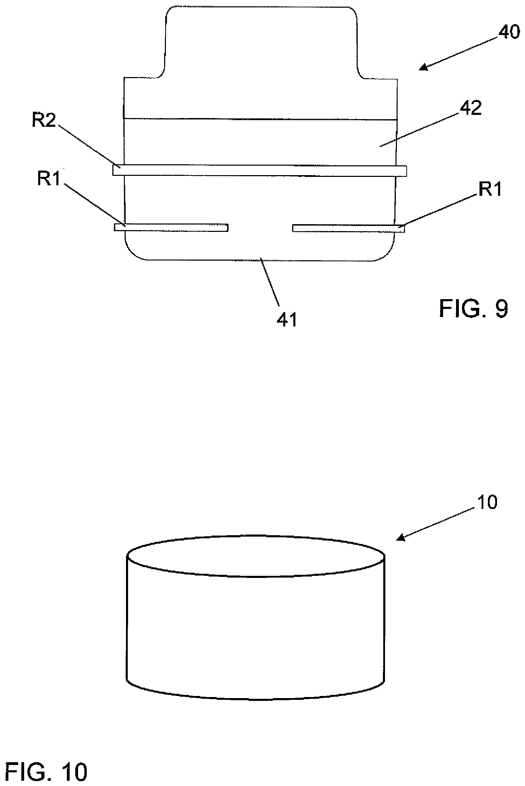

The monitoring device 1 comprises first of all an electronic unit 10 (figures 10-11) adapted to detect at least one characteristic quantity of a tyre and to transmit at least one corresponding parameter representative of said detected quantity.

For this purpose, the electronic unit 10 can be provided with at least one sensor 11, operatively associated to a processing/transmission system 12.

The at least one sensor 11 can be, for example a temperature sensor, a pressure sensor, a sensor able to measure the deformations undergone by the tyre while rolling, such as for example a strain gauge, an accelerometer, an optical sensor able to detect movement, a magnetoresistive sensor, an inertial sensor, a gyroscope, etc..

The processing/transmission system 12, operatively connected to said at least one sensor 11, acquires, processes and transmits the data detected by the latter.

The processing/transmission system 12 preferably comprises a microprocessor, an antenna and other circuitry necessary to process and/or analyze the signals coming from the at least one sensor 11, in order to make them suitable for data transmission from the monitoring device 1 towards a receiver placed on board of a vehicle.

In an embodiment, the data made available by the sensor 11 can be processed directly by the system 12, advantageously provided with an appropriate microprocessor or integrated circuit (e.g. of the ASIC type - Application Specific Integrated Circuit).

The processing/transmission system 12 thus allows a communication with the instruments available on board of the vehicle, for example periodically, so that all the relevant information can be provided to the driver and/or to a control system of the vehicle, and/or so that warning systems and/or systems for controlling the dynamics of the vehicle, of the braking, etc. can be activated or regulated at best.

Such communication can be unidirectional (from the processing/transmission system 12 to the instruments on board of the vehicle) or bidirectional.

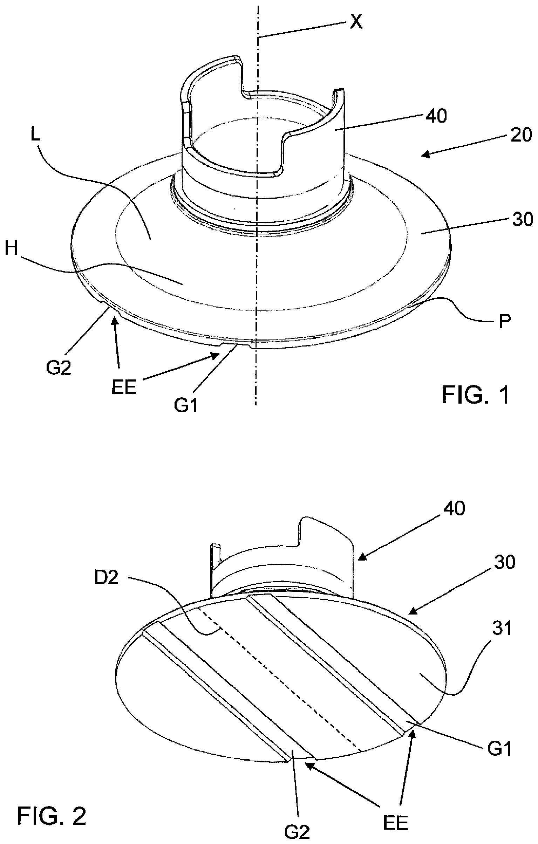

The monitoring system 1 further comprises a connection element 20 (figures 1-9), having the function of keeping the electronic unit 10 constrained to a portion of the tyre 100.

In the embodiment shown in the figures, the connection element 20 comprises a first portion 30 and a second portion 40.

The first portion 30 is preferably made of polymeric material. For example it can be made of elastomeric material.

By way of example, such elastomeric material can be obtained by a vulcanization of a crosslinkable elastomeric compound comprising a synthetic diene rubber, preferably in a quantity comprised between 20 and 80 phr, and a halogenated butyl rubber, preferably in a quantity comprised between 80 and 20 phr, as described in the aforementioned international patent application WO2010/043264, in the name of the same Applicant.

The first portion 30 has a base surface 31 adapted to be secured to the inner surface 100a of the tyre 100.

Preferably the base surface 31 has a substantially circular shape. By way of example, such circular shape can have a diameter comprised between about 30 mm and about 100 mm.

Preferably the base surface 31 has an area larger than about 700 mm², more preferably smaller than 7000 mm².

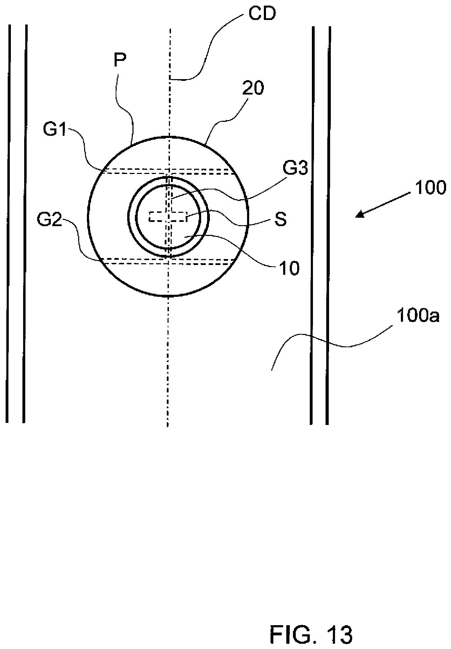

Advantageously the base surface 31 is delimited by a closed and substantially uninterrupted perimeter P (figures 1, 13).

Thus such perimeter P substantially delimitates the portion of connection element 20 that is kept in contact with the inner surface 100a of the tyre 100.

In the preferred embodiment, the connection element 20 has one single base surface 31, by means of which the connection element 20 itself is kept constrained to the inner surface 100a of the tyre 100.

Advantageously, the first portion 30 of the connection element 20 has at least one escape element EE (figures 1-4) at least partially obtained on said base surface 31 and cooperating with the same in order to release air accumulated between the base surface 31 and the inner surface 100a of the tyre 100 when the base surface 31 is secured to said inner surface 100a.

In an embodiment, the escape element EE comprises one or more grooves formed in said base surface 31.

The escape element EE comprises at least a first and a second grooves G1, G2 obtained in said base surface 31.

Preferably, each one of the first and second grooves G1, G2 joins a pair of perimetric points of the base surface 31.

Preferably, said first and a second grooves G1, G2 are arranged along respective chords of the circular shape of the base surface 31.

It has to be noted that the chords along which the first and the second groove G1, G2 are arranged are not diameters of the circular shape of the base surface 31. In other words, the first and the second groove G1, G2 do not pass through the geometric centre C of the base surface 31.

Preferably the first and second grooves G1, G2 are substantially parallel to each other.

By way of example, the distance between the first and the second groove G1, G2 can be comprised between 7 mm and about 40 mm.

Preferably, the first and/or the second groove G1, G2 may have an average width, measured in a direction orthogonal to their main extension and parallel to the base surface 31, comprised between 2 mm and about 5 mm.

Preferably the first and second grooves G1, G2 are positioned on opposite sides relative to a geometric centre C of said base surface 31.

Preferably the first and the second groove G1, G2 are substantially symmetrical relative to a diameter D2 of the circular shape of the base surface 31. In particular such diameter D2 can be substantially parallel to the first and second grooves G1, G2.

Preferably the first and the second grooves G1, G2 have substantially the same depth, measured in a direction orthogonal to the base surface 31. By way of example, the depth of the first and second grooves can be comprised between about 0.2 mm and about 3 mm.

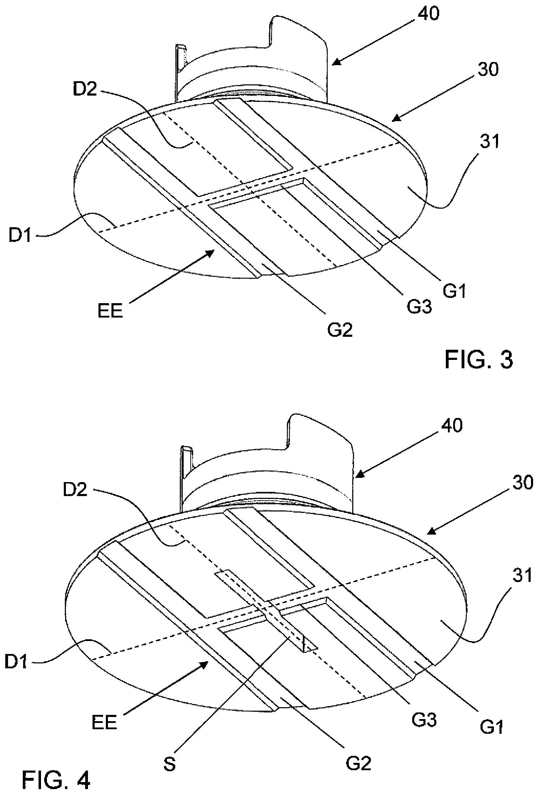

Advantageously, the escape element EE further comprises a third groove G3 obtained in the base surface 31 and joining the first and the second grooves G1, G2 (figures 3, 4, 6).

Preferably the third groove G3 is substantially arranged along a portion of a first diameter D1 of the circular shape of the base surface 31.

Said third groove G3 is delimited by the first and second grooves G1, G2.

Preferably, the third groove G3 may have an average width, measured in a direction orthogonal to its main extension and parallel to the base surface 31, comprised between 2 mm and about 6 mm.

Preferably the third groove G3 is substantially orthogonal to the first and second grooves G1, G2.

In practice, the first, second and third groove G1, G2, G3 define, on the base surface 31, substantially a "H" shape, preferably substantially centred in the geometric centre C of the base surface 31 itself.

Preferably the third groove G3 has the same depth, measured along a direction orthogonal to the base surface 31, relative to the first and/or second groove G1, G2.

By way of example, the depth of the third groove can be comprised between about 0.2 mm and about 3 mm.

Preferably the base surface 31 further has a slot S associated to said at least one escape element EE.

Preferably the slot S is interposed between the first and second grooves G1, G2 and is connected to the same, in particular by means of said third groove G3.

Preferably the slot S has a main extension substantially parallel to the first and/or second groove G1, G2.

By way of example, the slot S may have a substantially parallelepiped shape, wherein the longer side defines the aforementioned main extension.

Preferably the slot S does not join perimetric or circumferential points of the base surface 31. In particular the longer side is substantially shorter of the chord or of the diameter on which such longer side lies.

Said longer side may have a length comprised between about 20% and about 70% of the length of the first and/or second groove G1, G2 measured along its main extension.

Preferably the longer side of the slot S may have a length comprised between about 25% and about 75% of the length of a diameter of the circumferential profile of the base surface 31.

The slot S, in a direction substantially orthogonal to said longer side and substantially parallel to the base surface 31, may have a width comprised between about 1 mm and about 5 mm.

Preferably the width of the slot S is such that the borders orthogonal to the main extension of the slot S itself do not come in contact with each other during the rolling of the tyre 100, and in particular in correspondence of the beginning and of the end areas of the tyre footprint area.

Preferably the main extension of the slot S is substantially orthogonal to the third groove G3. Preferably the slot S has a higher depth, calculated in a direction orthogonal to the base surface 31, than the depth of the first and second grooves G1, G2, as well as of the third groove G3. By way of example, the depth of the slot S can be comprised between about 1 mm and about 5 mm.

Preferably the slot S is substantially equidistant to the first and second grooves G1, G2.

By way of example, such distance can be comprised between about 5 mm and about 30 mm. Preferably the slot S is arranged along a portion of a first diameter D1 of the circular shape of the base surface 31.

Preferably the slot S extends symmetrically relative to the second diameter D2 substantially orthogonal to the first and/or second groove G1, G2.

In a different embodiment (not shown), the escape element EE may comprise (alternatively or in combination with the escape elements EE previously shown) one or more through holes extending from the base surface 31 to the external side surface L of the first portion 30 of the connection element 20.

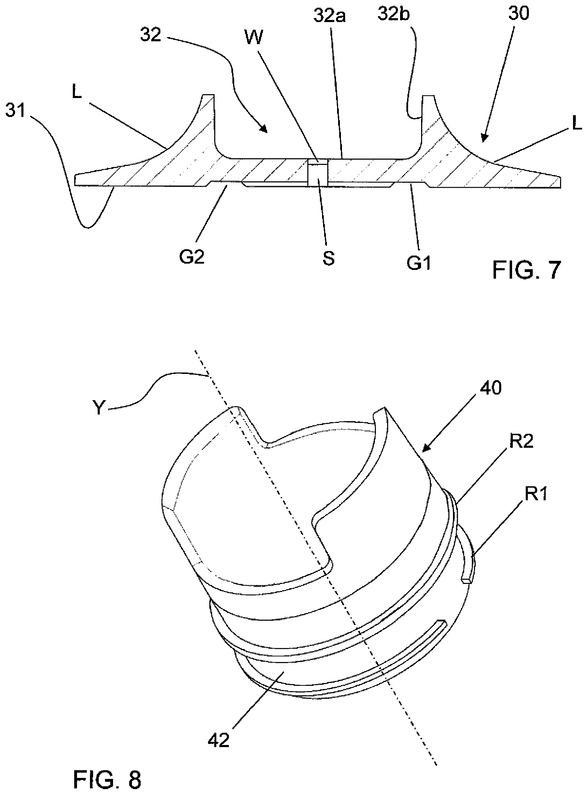

The first portion 30 of the connection element 20 further has a cavity 32 (figure 7) whose function is to house the second portion 40.

The cavity 32 is defined by a bottom surface 32a and by an internal lateral surface 32b of the first portion 30 of the connection element 20.

Preferably the cavity 32 has a substantially cylindrical shape.

By way of example, such cylindrical shape can have a height comprised between about 3 mm and about 25 mm.

By way of example, such cylindrical shape can have a diameter comprised between about 15 mm and about 50 mm.

Preferably the diameter of said cylindrical shape can be substantially equal to the length of the longer side of the slot S.

Advantageously the slot S is separated from the cavity 32 by a thin wall W (figure 7), having a thickness comprised between about 0,2 and about 1 mm. Alternatively, the slot S can cut completely all the first portion 30 in its most central zone, up to the second portion 40.

As schematically shown in the figures 1-7, the first portion 30 of the connection element 20 has preferably a tapered shape from the base surface 31 towards an upper edge of the internal side surface 32b of the first portion 30.

In a preferred embodiment, the profile defined by the external surface of the first portion 30 of the connection element 20 may have, starting from the perimetric zone and approaching to the central axis X, a first linear segment, followed by a curved segment, for example defined by a hyperbolic or parabolic curve.

Preferably the first portion 30 of the connection element 20 has an axial symmetry relative to a main axis or central axis X substantially orthogonal to said base surface 31 and passing through a geometric centre C of the circular shape of the base surface itself.

In practice, the first portion 30 of the connection element 20 has a "volcano" shape, whose crater is formed by the cavity 32.

Figures 2-4 show possible embodiments of the first portion 30. In particular, figure 2 shows an embodiment having only the first and second grooves G1, G2, without the third groove G3 and the slot S; figure 3 shows an embodiment having the first, the second and the third grooves G1, G2, G3, without the slot S; figure 4 shows an embodiment that has both the first, the second and the third grooves G1, G2, G3, and the slot S.

As said, the cavity 32 of the first portion 30 houses the second portion 40 of the connection element 20.

Preferably the second portion 40 is made of a comparatively more rigid material then the one which the first portion 30 is made of.

By way of example, the second portion may be made of a suitable plastic material, for example polyether ketone (e.g. Peek 450).

Preferably the second portion 40 of the connection element 20 has a base wall 41 and a side wall 42.

The base wall 41 is in contact with the bottom surface 32a of the first portion 30; the side wall 42 is in contact with the internal side surface 32b of the first portion 30.

The second portion 40 has advantageously a shape that is at least partially complementary to the shape of cavity 32.

By way of example, the second portion 40 may have a substantially cylindrical shape, preferably having a diameter comprised between about 15 mm and about 50 mm.

Preferably the second portion has a height, in a direction orthogonal to the base surface 31, comprised between about 20 mm and about 70 mm.

Preferably the second portion 40 has at least a first rib R1 extending from said side wall 42 in the proximity of said base wall 41.

Advantageously, the rib R1 has at least one interruption, and in particular a pair of interruptions placed on opposite sides relative to a central axis Y of said second portion 40.

Preferably the second portion 40 further has a second rib R2 extending from said side wall 42.

Preferably the second rib R2 is substantially continuous along the external perimetric extension of said side wall 42.

Preferably the second rib R2 is at a longer distance from the bottom wall 41 than the first rib R1.

The electronic unit 10 is housed within the second portion 40 of the connection element 20 and in particular in the housing defined by the base wall 41 and by the side wall 42.

In particular, the electronic unit 10 is kept constrained to the second portion 40 in order to detect the quantities of interest, above all during the rolling of the tyre.

In order to secure the electronic unit 10 to the second portion 40 any suitable technique can be used. For example the electronic unit 10 can be inserted in the second portion 40 so as to be removable. Alternatively, the electronic unit 10 can be permanently secured (for example by gluing) to the second portion 40.

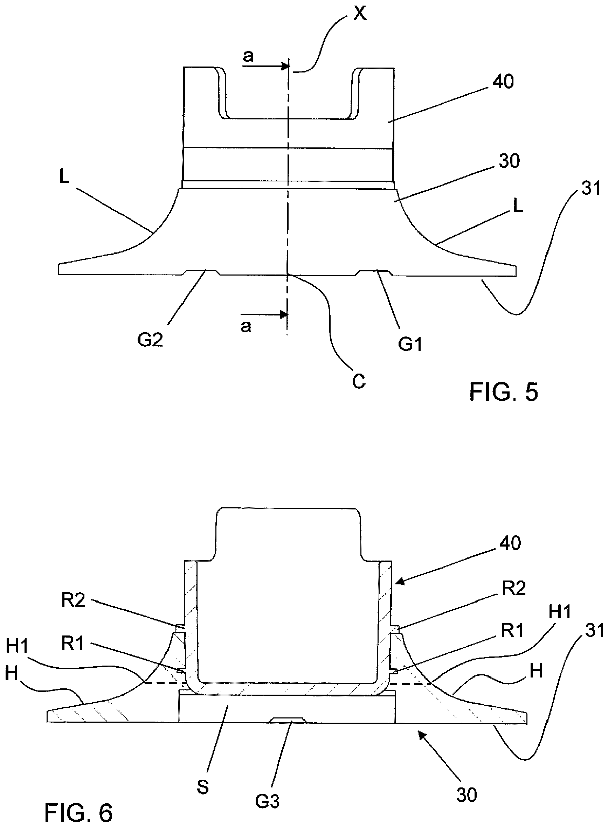

Advantageously at least the part of the first portion 30 which is interposed between the electronic unit 10 and the base surface 31 is delimited by a substantially continuous perimetric surface H (figures 1,6).

By way of example, in figure 6, the part of the first portion 30 which is interposed between the electronic unit 10 and the base surface 31 is superiorly delimited by the dashed line HI.

The part of the first portion 30 which is interposed between the electronic unit 10 and the base surface 31 is thus preferably made in a single piece. This allows to keep the electronic unit 10 firmly constrained to the tyre and, at the same time, to reduce the filtering and/or dampening of the deformations undergone by the tyre, so as to allow to the sensor or to the sensors included in the electronic unit 10 to detect, in the most reliable and precise way, the mechanical stresses undergone by the tyre.

Preferably the entire projection of the electronic unit 10 upon the base surface 31 is confined within the perimeter P of the base surface 31 itself, as schematically shown in figure 13.

In other words, when the monitoring device 1 is not mounted, yet, inside a tyre, the projection of the electronic unit 10 upon the plane where the base surface 31 lies is entirely confined within the perimeter P of the base surface 31 itself.

In practice, when the monitoring device 1 is fully assembled, and also when the monitoring device 1 itself is not mounted yet inside the tyre, neither the electronic unit 10, nor the second portion 40 of the connection element 20 can be released from the first portion 10 by means of a movement towards and/or through the base surface 31, namely a downward movement, by observing for example figures 5 and 6.

When the electronic unit 10 has to be installed in a tyre 100, the following operations can be carried out (not necessarily in the order provided):
- the electronic unit 10 is suitably housed in and constrained to (possibly in a removable way) the second portion 40 of the connection element 20;
- the base surface 31 of the first portion 30 of the connection element 20 is secured to the inner surface 100a of the tyre 100.

The securing of the base surface 31 to the inner surface 100a of the tyre 100 can be obtained, for example, by gluing.

Preferably the base surface 31 of the first portion 30 of said connection element 20 is secured to the inner surface 100a of the tyre 100 so that said first and/or second groove G1, G2 is substantially orthogonal to a circumferential direction CD of said tyre 100.

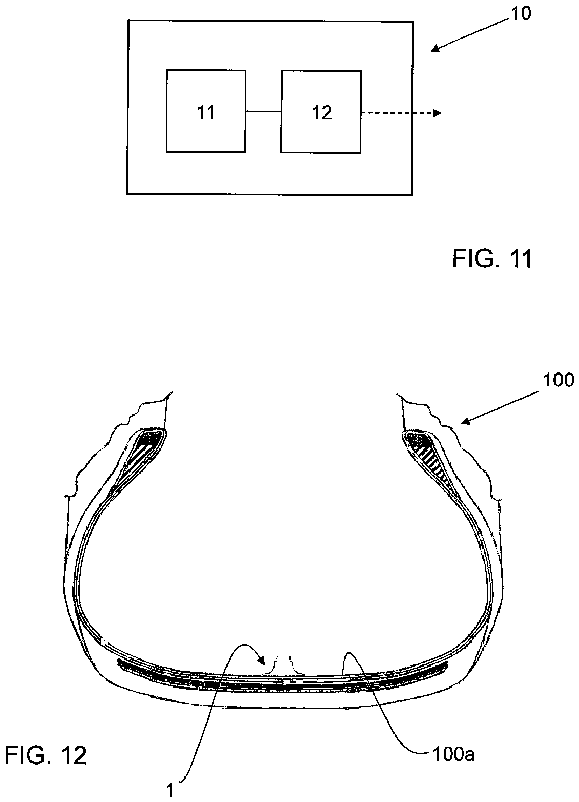

Figures 12 and 13 show a monitoring device 1 fixed to the radially internal surface 100a of the tyre 100. It has to be noted that the dimensions of the monitoring device 1 were deliberately increased relative to those of the tyre, in order to make such figures more understandable.

In use, during the rolling of the tyre 100, while the electronic unit 10 detects and transmits the predetermined data, some air is stored at the interface between the base surface 31 and the internal surface 100a. This occurs in particular when the device 1 undergoes stresses having a significant centripetal radial component.

Then, when the monitoring device 1 undergoes stresses having a significant centrifugal radial component, the air that was previously stored is released by means of the escape element EE, so as to avoid that the inevitable temperature increase due to the rolling of the tyre causes an increase of the pressure exerted by the air accumulated, up to provoke micro-fractures and detachment of the connection element from the internal surface 100a of the tyre 100.

Advantageously, at least part of the air stored can be accumulated in the slot S.

## Claims

1. A device for monitoring tyres for vehicle wheels, said device comprising:
an electronic unit (10) adapted to detect at least one characteristic quantity of a tyre (100) and to transmit at least one corresponding parameter representative of said detected quantity;
a connection element (20) for keeping said electronic unit (10) constrained to an inner surface (100a) of said tyre (100), said connection element (20) comprising: a first portion (30) having a base surface (31) adapted to be secured to the inner surface (100a) of said tyre (100), and a cavity (32) for housing said electronic unit (10);
wherein at least that part of said first portion (30) which is interposed between said electronic unit (10) and said base surface (31) is delimited by a substantially continuous perimetric surface (H);
wherein said first portion (30) has at least one escape element (EE) at least partially obtained on said base surface (31) and cooperating with the same in order to release air accumulated between the base surface (31) and the inner surface (100a) of said tyre (100) when said base surface (31) is secured to said inner surface (100a) **characterized in that** said escape element (EE) comprises a first, a second and a third grooves (G1, G2, G3) formed in said base surface (31),
wherein said third groove (G3) joins said first and second grooves (G1, G2) and is delimited by said first and second grooves (G1, G2).

2. A device according to claim 1, wherein one or more of said first and second grooves (G1, G2) grooves join perimetric points of said base surface (31).

3. A device according to claim 1 or 2, wherein said first and second grooves (G1, G2) are substantially parallel to each other.

4. A device according to any one of the preceding claims, wherein said base surface (31) has a substantially circular shape, said first and second grooves (G1, G2) being arranged along respective chords of said circular shape.

5. A device according to any one of the preceding claims, wherein said first and second grooves (G1, G2) are positioned on opposite sides relative to a geometric centre (C) of said base surface (31).

6. A device according to claim 5, wherein said first and second grooves (G1, G2) are substantially symmetrical relative to said geometric centre (C) of said base surface (31).

7. A device according to any one of the preceding claims, wherein said base surface (31) has a substantially circular shape and said third groove (G3) is substantially arranged along a portion of a first diameter (D1) of said circular shape.

8. A device according to any one of the preceding claims, wherein said third groove (G3) is substantially orthogonal to said first and second grooves (G1, G2).

9. A device according to any one of the preceding claims wherein said first, second and third grooves (G1, G2, G3) have a depth comprised between 0.2 mm and 3 mm and/or wherein said first and second grooves (G1, G2) have an average width, measured in a direction orthogonal to their main extension and parallel to the base surface (31), comprised between 2 mm and 5 mm and/or wherein said third groove (G3) has an average width, measured in a direction orthogonal to its main extension and parallel to the base surface (31), comprised between 2 mm and 6 mm.

10. A device according to any one of the preceding claims, wherein said base surface (31) further comprises a slot (S) associated with said at least one escape element (EE).

11. A device according to claim 10, wherein said slot (S) is interposed between and connected to said first and second grooves (G1, G2).

12. A device according to claim 10 or 11, wherein said base surface (31) has a substantially circular shape and said slot (S) is arranged along a portion of a second diameter (D2) of said circular shape.

13. A device according to any one of the preceding claims, wherein the first portion (30) of said connection element (20) has a tapered shape from said base surface (31) towards an upper edge of said cavity (32).

14. A device according to any one of the preceding claims, wherein said connection element (20) comprises a second portion (40) secured in said cavity (32) and housing said electronic unit (10).

15. A tyre for vehicle wheels, comprising:
an inner surface (100a) having a substantially toroidal shape;
a device (1) for monitoring tyres for vehicular wheels according to anyone of the preceding claims, said device (1) being operationally connected to said inner surface (100a) of said tyre (100) with said base surface (31) secured to the inner surface (100a) of said tyre (100).

## Patentansprüche

1. Einrichtung zur Überwachung von Reifen für Fahrzeugräder, wobei die Einrichtung umfasst:
eine elektronische Einheit (10), die dazu geeignet ist, zumindest eine kennzeichnende Quantität eines Reifens (100) zu erfassen und zumindest einen entsprechenden Parameter zu übertragen, der die erfasste Quantität darstellt;
ein Verbindungselement (20), um die elektronische Einheit (10) an einer inneren Oberfläche (100a) des Reifens (100) festzuhalten, wobei das Verbindungselement (20) umfasst: einen ersten Abschnitt (30) mit einer Grundfläche (31), die dazu geeignet ist, an der inneren Oberfläche (100a) des Reifens (100) gesichert zu werden,
und einen Hohlraum (32) zur Unterbringung der elektronischen Einheit (10);
wobei zumindest jener Teil des ersten Abschnitts (30), der zwischen der elektronischen Einheit (10) und der Grundfläche (31) angeordnet ist, durch eine im Wesentlichen umlaufende Oberfläche (H) begrenzt wird;
wobei der erste Abschnitt (30) zumindest ein Ausleitelement (EE) aufweist, das zumindest teilweise an der Grundfläche (31) gehalten wird und mit demselben zusammenwirkt, um Luft, die sich zwischen der Grundfläche (31) und der inneren Oberfläche (100a) des Reifens (100) ansammelt, wenn die Grundfläche (31) an der inneren Oberfläche (100a) gesichert wird, freizugeben,
**dadurch gekennzeichnet, dass**
das Ausleitelement (EE) erste, zweite und dritte Nuten (G1, G2, G3) umfasst, die in der Grundfläche (31) ausgebildet sind,
wobei die dritte Nut (G3) die erste und zweite Nut (G1, G2) berührt und durch die erste und zweite Nut (G1, G2) begrenzt wird.

2. Einrichtung nach Anspruch 1, wobei sich eine oder mehrere der ersten und zweiten Nuten (G1, G2) mit Umfangspunkten der Grundfläche (31) berühren.

3. Einrichtung nach Anspruch 1 oder 2, wobei die erste und die zweite Nut (G1, G2) im Wesentlichen parallel zueinander verlaufen.

4. Einrichtung nach einem der vorhergehenden Ansprüche, wobei die Grundfläche (31) im Wesentlichen eine kreisförmige Gestalt aufweist, wobei die erste und zweite Nut (G1, G2) entlang jeweiliger Sehnen der kreisförmigen Gestalt angeordnet sind.

5. Einrichtung nach einem der vorhergehenden Ansprüche, wobei die erste und zweite Nut (G1, G2) relativ zu einem geometrischen Zentrum (C) der Grundfläche (31) an gegenüberliegenden Seiten positioniert sind.

6. Einrichtung nach Anspruch 5, wobei die erste und zweite Nut (G1, G2) relativ zu einem geometrischen Zentrum (C) der Grundfläche (31) im Wesentlichen symmetrisch sind.

7. Einrichtung nach einem der vorhergehenden Ansprüche, wobei die Grundfläche (31) eine im Wesentlichen kreisförmige Gestalt aufweist, und die dritte Nut (G3) im Wesentlichen entlang eines Abschnitts eines ersten Durchmessers (D1) der kreisförmigen Gestalt angeordnet ist.

8. Einrichtung nach einem der vorhergehenden Ansprüche, wobei die dritte Nut (G3) im Wesentlichen orthogonal auf die ersten und zweiten Nuten (G1, G2) steht.

9. Einrichtung nach einem der vorhergehenden Ansprüche, wobei die erste, zweite und dritte Nut (G1, G2, G3) eine Tiefe zwischen 0,2 mm und 3 mm aufweisen, und/oder wobei die erste und zweite Nut (G1, G2) eine durchschnittliche Breite, gemessen in einer Richtung orthogonal auf ihre Haupterstreckung und parallel zu der Grundfläche (31), zwischen 2 mm und 5 mm aufweisen, und/oder wobei die dritte Nut (G3) eine durchschnittliche Breite, gemessen in einer Richtung orthogonal auf ihre Haupterstreckung und parallel zu der Grundfläche (31), zwischen 2 mm und 6 mm aufweist.

10. Einrichtung nach einem der vorhergehenden Ansprüche, wobei die Grundfläche (31) des Weiteren einen Schlitz (S) umfasst, der dem zumindest einen Ausleitelement (EE) zugeordnet ist.

11. Einrichtung nach Anspruch 10, wobei der Schlitz (S) zwischen der ersten und zweiten Nut (G1, G2) angeordnet und damit verbunden ist.

12. Einrichtung nach Anspruch 10 oder 11, wobei die Grundfläche (31) eine im Wesentlichen kreisförmige Gestalt aufweist, und der Schlitz (S) entlang eines Abschnitts eines zweiten Durchmessers (D2) der kreisförmigen Gestalt angeordnet ist.

13. Einrichtung nach einem der vorhergehenden Ansprüche, wobei der erste Abschnitt (30) des Verbindungselements (20) eine von der Grundfläche (31) zu einem oberen Rand des Hohlraums (32) verjüngte Gestalt aufweist.

14. Einrichtung nach einem der vorhergehenden Ansprüche, wobei das Verbindungselement (20) einen zweiten Abschnitt (40) umfasst, der in dem Hohlraum (32) gesichert ist und die elektronische Einheit (10) aufnimmt.

15. Reifen für Fahrzeugräder, der umfasst:
eine innere Oberfläche (100a), die eine im Wesentlichen ringförmige Gestalt aufweist;
eine Einrichtung (1) zur Überwachung von Reifen für Fahrzeugräder nach einem der vorhergehenden Ansprüche, wobei die Einrichtung (1) mit der inneren Oberfläche (100a) des Reifens (100) wirkverbunden ist, wobei die Grundfläche (31) an der inneren Oberfläche (100a) des Reifens (100) gesichert ist.

## Revendications

1. Dispositif permettant de contrôler des pneus pour roues de véhicule, ledit dispositif comprenant .
une unité électronique (10) adaptée pour détecter au moins une grandeur caractéristique d'un pneu (100) et pour transmettre au moins un paramètre correspondant représentant ladite grandeur détectée ;
un élément de connexion (20) pour maintenir ladite unité électronique (10) attachée à une surface interne (100a) dudit pneu (100), ledit élément de connexion (20) comprenant : une première partie (30) ayant une surface de base (31) adaptée pour être fixée à la surface interne (100a) dudit pneu (100), et une cavité (32) pour recevoir ladite unité électronique (10) ;
où au moins la partie de ladite première partie (30) qui est interposée entre ladite unité électronique (10) et ladite surface de base (31) est délimitée par une surface périmétrique essentiellement continue (H) ;
où ladite première partie (30) a au moins un élément d'échappement (EE) au moins partiellement ménagé sur ladite surface de base (31) et coopérant avec celle-ci afin de libérer l'air accumulé entre la surface de base (31) et la surface interne (100a) dudit pneu (100) lorsque ladite surface de base (31) est fixée à ladite surface interne (100a), **caractérisé en ce que** ledit élément d'échappement (EE) comprend des première, deuxième et troisième rainures (G1, G2, G3) formées dans ladite surface de base (31),
où ladite troisième rainure (G3) joint lesdites première et deuxième rainures (G1, G2) et est délimitée par lesdites première et deuxième rainures (G1, G2).

2. Dispositif selon la revendication 1, dans lequel une ou plusieurs desdites première et deuxième rainures (G1, G2) joignent des points périmétriques de ladite surface de base (31).

3. Dispositif selon la revendication 1 ou 2, dans lequel lesdites première et deuxième rainures (G1, G2) sont essentiellement parallèles entre elles.

4. Dispositif selon l'une quelconque des revendications précédentes, dans lequel ladite surface de base (31) a une forme essentiellement circulaire, lesdites première et deuxième rainures (G1, G2) étant agencées le long de câbles respectifs de ladite forme circulaire.

5. Dispositif selon l'une quelconque des revendications précédentes, dans lequel lesdites première et deuxième rainures (G1, G2) sont positionnées sur des côtés opposés par rapport à un centre géométrique (C) de ladite surface de base (31).

6. Dispositif selon la revendication 5, dans lequel lesdites première et deuxième rainures (G1, G2) sont essentiellement symétriques par rapport audit centre géométrique (c) de ladite surface de base (31).

7. Dispositif selon l'une quelconque des revendications précédentes, dans lequel ladite surface de base (31) a une forme essentiellement circulaire et ladite troisième rainure (G3) est essentiellement agencée le long d'une partie d'un premier diamètre (D1) de ladite forme circulaire.

8. Dispositif selon l'une quelconque des revendications précédentes, dans lequel ladite troisième rainure (G3) est essentiellement orthogonale auxdites première et deuxième rainures (G1, G2).

9. Dispositif selon l'une quelconque des revendications précédentes, dans lequel lesdites première, deuxième et troisième rainures (G1, G2, G3) ont une profondeur comprise entre 0,2 mm et 3 mm et/ou dans lequel lesdites première et deuxième rainures (G1, G2) ont une largeur moyenne, mesurée dans une direction orthogonale à leur extension principale et parallèle à la surface de base (31), comprise entre 2 mm et 5 mm et/ou dans lequel ladite troisième rainure (G3) a une largeur moyenne, mesurée dans une direction orthogonale à son extension principale et parallèle à la surface de base (31), comprise entre 2 mm et 6 mm.

10. Dispositif selon l'une quelconque des revendications précédentes, dans lequel ladite surface de base (31) comprend en outre une fente (S) associée audit au moins un élément d'échappement (EE).

11. Dispositif selon la revendication 10, dans lequel ladite fente (S) est interposée entre lesdites première et deuxième rainures (G1, G2) et est reliée à celles-ci.

12. Dispositif selon la revendication 10 ou 11, dans lequel ladite surface de base (31) a une forme essentiellement circulaire et ladite fente (S) est agencée le long d'une partie d'un deuxième diamètre (D2) de ladite forme circulaire.

13. Dispositif selon l'une quelconque des revendications précédentes, dans lequel la première partie (30) dudit élément de connexion (20) présente une forme conique à partir de ladite surface de base (31) vers un bord supérieur de ladite cavité (32).

14. Dispositif selon l'une quelconque des revendications précédentes, dans lequel ledit élément de connexion (20) comprend une deuxième partie (40) fixée dans ladite cavité (32) et recevant ladite unité électronique (10) .

15. Pneu pour roues de véhicule, comprenait
une surface interne (100a) ayant une forme essentiellement toroïdale ;
un dispositif (1) permettant de contrôler des pneus pour roues de véhicule selon l'une quelconque des revendications précédentes, ledit dispositif (1) étant relié de manière fonctionnelle à ladite surface interne (100a) dudit pneu (100) avec ladite surface de base (31) fixée à la surface interne (100a) dudit pneu (100).
